# EUROPÄISCHE PATENTSCHRIFT

(11) **EP 2 681 445 B1**
(45) Veröffentlichungstag und Bekanntmachung des Hinweises auf die Patenterteilung: **22.11.2017**
(21) Anmeldenummer: 12706554.8
(22) Anmeldetag: 27.02.2012
(51) Int. Cl.: F03B 13/16, H02J 15/00, F03B 13/06

(54) **HYDRAULISCHER ENERGIESPEICHER**
HYDRAULIC ENERGY STORE
RÉSERVOIR D'ÉNERGIE HYDRAULIQUE

(30) Priorität: 28.02.2011 DE 102011012594
(43) Veröffentlichungstag der Anmeldung: 08.01.2014
(73) Patentinhaber: Universität Innsbruck, 6020 Innsbruck (AT)
(72) Erfinder: KLAR, Robert, A-6632 Ehrwald (AT); AUFLEGER, Markus, A-6020 Innsbruck (AT)
(74) Vertreter: MFG Patentanwälte Meyer-Wildhagen Meggle-Freund Gerhard PartG mbB
(86) Internationale Anmeldenummer: PCT/EP2012/053276
(87) Internationale Veröffentlichungsnummer: WO 2012/116956

(56) Entgegenhaltungen:
- DE-A1-102008 020 987
- DE-A1-102010 034 160
- GB-A- 1 601 398

## Beschreibung

Die vorliegende Erfindung betrifft einen hydraulischen Energiespeicher mit einem ersten und einem zweiten Fluidreservoir, deren Fluidspiegel in unterschiedlicher Höhe verlaufen, die über eine Turbinen-Pumpanordnung miteinander verbunden sind, bei deren Betrieb ein Fluid zwischen dem ersten und zweiten Fluidreservoir hin und her bewegbar ist, dabei Energie umwandelbar ist, und das zweite Fluidreservoir als Behälter ausgebildet ist, welcher innerhalb des Fluids im ersten Fluidreservoir angeordnet ist.

Der Begriff Fluidspiegel bezeichnet allgemein ein Fluidniveau in einem Fluidreservoir und ist nicht auf eine freie, ungestörte Fluidoberfläche beschränkt.

Ein solcher Energiespeicher nutzt das Prinzip von Pumpspeicherkraftwerken, das auf folgenden hydraulischen und energetischen Zusammenhängen beruht:
In einem ersten (oberen) und einem zweiten (unteren) Reservoir befindet sich Wasser. Zwischen den Reservoiren verläuft eine Verbindungsleitung, in der sich eine Turbinen-Pumpanordnung befindet. Der Begriff Turbinen-Pumpanordnung beschreibt nachfolgend solche Anordnungen, die eine oder mehrere Pumpturbinen bzw. Pumpe(n) und/oder Turbine(n) umfassen.

Je nach Strömungsrichtung in der Verbindungsleitung und in Abhängigkeit von den Druckverhältnissen wird Energie umgewandelt, und zwar potentielle Energie in kinetische Energie beim Antreiben der Turbinen-Pumpanordnung durch aus dem oberen in das untere Reservoir herabströmendes Wasser (Turbinenbetrieb) oder kinetische Energie in potentielle Energie beim Hinaufpumpen von Wasser aus dem unteren in das obere Reservoir (Pumpbetrieb).

Die Turbinen-Pumpanordnung ist dabei in der Regel an eine oder mehrere elektrische Maschinen gekoppelt, welche im Turbinenbetrieb die kinetische Energie in elektrische Energie umwandeln (Generator) oder im Pumpbetrieb elektrische Energie in kinetische Energie zum Antrieb der Turbinen-Pumpanordnung umwandeln (elektrischer Motor). Die elektrische Energie wird an ein Stromnetz abgegeben oder über dieses aufgenommen.

Die Speicherung elektrischer Energie gewinnt immer mehr Bedeutung für den Ausgleich der Schwankungen zwischen Strombedarf und Stromproduktion. Einspeisungen von Strom aus diskontinuierlich verfügbaren erneuerbaren Energien verstärken verbrauchsbestimmte Netzschwankungen und steigern den Bedarf an Regelung und Speicherung von elektrischer Energie. Speicherkapazitäten in Form von Pumpspeicherkraftwerken helfen dabei, Stromerzeugung und -verbrauch zeitlich zu entkoppeln. So kann Strom bei hohem Stromerzeugungsvolumen (z.B. aus erneuerbaren Energien) und/oder bei geringem Verbrauchsvolumen zu Schwachlastzeiten zwischengespeichert werden, um diesen bedarfsgerecht wieder ins Stromnetz einzuspeisen.

Die herkömmlichen Pumpspeicherkraftwerke und die in ihrer Funktion vergleichbaren Ringwallspeicherkraftwerke (vgl. DE 10 2009 005 360 A) erfordern jedoch eine geeignete Landschaftstopographie und/oder erhebliche Eingriffe in die Landschaft. Die erforderlichen Genehmigungsverfahren sind daher oft problematisch. Darüber hinaus sind die topographischen Voraussetzungen zum Bau solcher Speicherkraftwerke in den Regionen, in denen die höchsten Windenergiekapazitäten verfügbar sind (Nord- und Ostsee), vergleichsweise schlecht. Ringwallspeicher würden erhebliche Eingriffe in z.T. dicht besiedelten Gebieten (Niederlande, Dänemark) erfordern.

Bei Pumpspeicherkavernenkraftwerken (siehe z.B. DE 10 2008 020 987 A1) mit einem natürlichen Gewässer als Oberbecken ist unter dem Oberbecken eine großvolumige unterirdische Kaverne erforderlich, so dass Wasser zwischen Kaverne und Oberbecken hin und her gefördert werden kann.

Die Nutzung aufgelassener Braunkohletagebaustrecken als Pumpspeicher (vgl. DE 195 13 817) erfordert u.U. den Bau langer Übertragungsleitungen aus windreichen Gebieten. Zweigeschossige Bauwerke mit übereinander angeordneten Reservoiren erfordern großvolumige Landbauwerke (vgl. DE 10 2007 013 610 A).

Gleiches gilt für Gewichtsspeicherkraftwerke, bei denen die Energieumwandlung durch Anheben bzw. Absenken großer schwerer Gewichte erfolgt (vgl. DE 20 2009 002 341). Auch sog. Hubspeicherkraftwerke, bei denen große Massen hydraulisch angehoben bzw. abgesenkt werden, sind mit hohem technischen Aufwand verbunden und erfordern ebenfalls Eingriffe in die Landschaft (vgl. DE 10 2007 017 695 A, DE 10 2008 006 897 A, Eduard Heindl: "Hydraulische Energiespeicher für den Ausbau der erneuerbaren Energien").

Es gibt also einen Bedarf an Energiespeichern, die insbesondere im Bereich von Offshore-Windenergieanlagen verfügbar sein sollten. Dazu wird in der DE 42 21 657 A1 ein Unterwasserkraftwerk mit einem unter der Wasseroberfläche befindlichen Reservoir vorgeschlagen, aus dem im Pumpbetrieb Wasser an die Oberfläche bzw. in das umgebende Gewässer gepumpt wird und im Turbinenbetrieb Wasser von der Oberfläche einer ebenfalls unter dem Wasserspiegel des Gewässers angeordneten Turbine zugeführt wird. Solche Anlagen erfordern Unterwasserbauwerke und sind hinsichtlich der Wartung und zu erwartender Reparaturen möglicherweise problematisch.

Es besteht daher die Aufgabe, verbesserte Energiespeicher, insbesondere für den Offshore-Bereich, bereitzustellen.

Diese Aufgabe erfüllt der hydraulische Energiespeicher gemäß Anspruch 1.

Dabei ist vorgesehen, dass das zweite Fluidreservoir als im ersten Fluidreservoir schwimmender Behälter ausgebildet ist, dessen Fluidspiegel im Betrieb so veränderbar ist, dass dadurch auftriebsbedingt dessen Eintauchtiefe im ersten Fluidreservoir veränderbar ist und eine zur Energieumwandlung nutzbare Niveaudifferenz vorhanden ist. Zum Speichern von elektrischer Energie wird dabei das zweite Fluidreservoir im Pumpbetrieb geleert oder gefüllt und dabei im ersten Fluidreservoir angehoben oder abgesenkt. Dabei durchströmt das Fluid die Turbinen-Pumpanordnung, die sich zusammen mit dem zweiten Fluidreservoir anhebt oder absenkt. Die für den Turbinenbetrieb erforderliche Druckdifferenz wird dabei durch die Niveaudifferenz zwischen den Fluidspiegeln der beiden Fluidreservoirs definiert.

Liegt der Fluidspiegel im zweiten unterhalb des Fluidspiegels im ersten Fluidreservoir (Anspruch 2), hebt sich das zweite Fluidreservoir durch den während des Betriebs verringerten Auftrieb und gibt potentielle Energie durch Absenken seiner Masse ab, während das Fluid das in zweite Reservoir hineinströmt.

Ist der Auftrieb des zweiten Fluidreservoirs dagegen so groß, dass der Fluidspiegel darin oberhalb des Fluidspiegels im ersten Fluidreservoir liegt, strömt Fluid aus dem zweiten Fluidreservoir in das erste und gibt dabei seine potentielle Energie ab.

Durch Zusatzlasten (Ballast) kann bei manchen Varianten die nutzbare Niveaudifferenz bzw. die Eintauchtiefe erhöht und damit die Leistung der vorgesehenen Maschinen an den Bedarf angepasst werden. In anderen Ausführungen wird dieser Effekt durch Zugvorrichtungen erreicht, die das zweite Fluidreservoir nach unten in das Fluid des ersten Fluidreservoirs hineinziehen. Diese Zugvorrichtungen können unter anderem als elastische Elemente bzw. als am Grund des ersten Fluidreservoirs umgelenkte Auftriebskörper ausgebildet sein.

Es gibt Ausführungen, bei denen das zweite Fluidreservoir mit Auftriebskörpern versehen ist, um den Fluidspiegel im zweiten Fluidreservoir oberhalb des Fluidspiegels im ersten Fluidreservoir zu halten. Bei dieser Lösung kann das zweite Fluidreservoir unsinkbar sein und kann damit auch gefüllt immer teilweise über der Fluidoberfläche des ersten Fluidreservoirs verbleiben.

Die Energiespeicherkapazität kann bei diesen Ausführungen dadurch erhöht werden, dass beim Füllen des zweiten Fluidreservoirs das einströmende Fluid ein elastisches Element gegen eine Spannkraft verformt. Damit wird zusätzlich zu der erhöhten potentiellen Energie des Fluids im zweiten Fluidreservoir Verformungsenergie gespeichert, die dann zur Energiegewinnung wieder abgegeben werden kann.

Das elastische Element kann dabei eine Federkonstruktion umfassen oder als gasförmiger Puffer ausgebildet sein. Dazu gibt es Ausführungen, bei denen das zweite Fluidreservoir als geschlossener (gasdichter) Behälter ausgeführt ist, bei dem das über dem Fluidspiegel befindliche Gas- oder Luftkissen als gasförmiger Puffer dient, der so auf einfache Art und Weise realisierbar ist.

Zur Minimierung der hydraulischen Verluste wird die Turbinen-Pumpanordnung vorzugsweise in einer Öffnung im Bodenbereich des zweiten Fluidreservoirs angeordnet. Öffnung bezeichnet dabei eine kommunizierende Verbindung zwischen dem ersten und zweiten Fluidspeicher, die zum Betrieb der Turbinen-Pumpanordnung erforderliche Führungen, Leitungen, Kammern oder ähnliches umfasst.

Zum Betrieb in einem elektrischen Stromnetz gibt es Ausführungen, bei denen die Turbinen-Pumpanordnung mit einer elektrischen Maschine koppelbar ist, im Pumpbetrieb mit einem elektrischen Motor und im Turbinenbetrieb mit einem Generator. Die elektrische Maschine ist dabei mit einem elektrischen Verbraucher und/oder mit einer elektrischen Stromquelle verbindbar.

Anspruch 11 betrifft eine Großspeicheranlage mit einem erfindungsgemäßen hydraulischen Energiespeicher, bei welchem das erste Fluidreservoir ein Gewässer, insbesondere ein Meer, See oder Stausee, ist.

Ausführungsbeispiele der vorliegenden Erfindung werden nachfolgend anhand der schematischen Darstellungen erläutert. Dabei zeigt
- Figur 1: ein erstes Ausführungsbeispiel eines erfindungsgemäßen Hydraulikspeichers mit einem zweiten Fluidreservoir, dessen Fluidspiegel unterhalb des Fluidspiegels im ersten Fluidreservoir liegt und in drei verschiedenen Betriebszuständen dargestellt ist;
- Figur 2: den in Figur 1 dargestellten hydraulischen Energiespeicher, bei dem die Eintauchtiefe des zweiten Fluidreservoirs über Federelemente erhöht wird;
- Figur 3: den in Figur 1 dargestellten hydraulischen Energiespeicher, bei dem die Eintauchtiefe des zweiten Fluidreservoirs über eine Zugvorrichtung über am Grund des ersten Fluidreservoirs umgelenkte Auftriebskörper erhöht wird;
- Figur 4: ein zweites Ausführungsbeispiel eines erfindungsgemäßen hydraulischen Energiespeichers, bei dem der Auftrieb des zweiten Fluidreservoirs so eingestellt ist, dass dessen Fluidspiegel oberhalb des Fluidspiegels im ersten Fluidreservoir liegt;
- Figur 5: den in Figur 4 dargestellten hydraulischen Energiespeicher, bei dem die Energiespeicherkapazität durch eine Federanordnung erhöht wird;
- Figur 6: eine Variante des in Figur 4 dargestellten hydraulischen Energiespeichers, bei welchem das zweite Fluidreservoir als geschlossener Behälter ausgebildet ist;

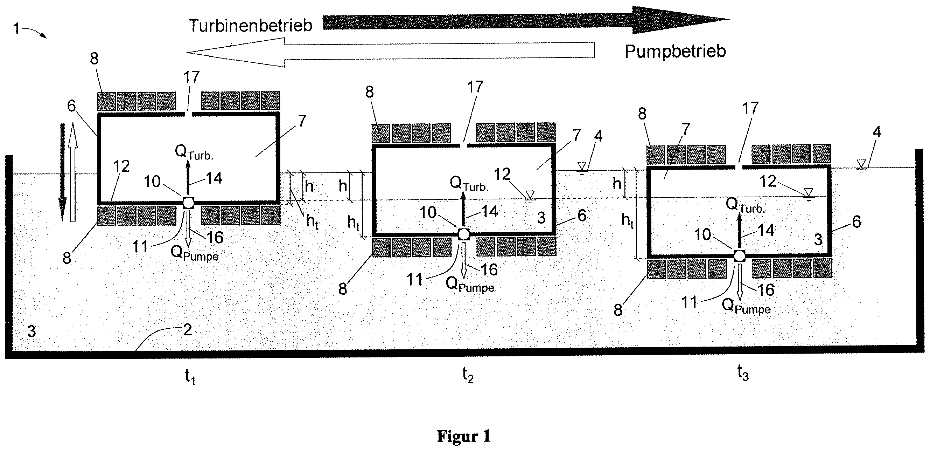

Ausführungsbeispiele der Erfindung werden nun anhand der Figuren 1 bis 6 erläutert, in denen jeweils ein zweites Fluidreservoir in drei unterschiedlichen Betriebszuständen t₁, t₂ und t₃ dargestellt ist.

Bevor im Detail auf die Ausführungsbeispiele eingegangen wird, folgen noch einige grundlegende Erläuterungen zur Erfindung:
Hydraulische Energiespeicher verwandeln im Turbinenbetrieb potentielle Energie mittels Turbinen und Generatoren in elektrische Energie und im Pumpbetrieb die zur Energiespeicherung zur Verfügung stehende elektrische Energie mittels Motoren und Pumpen in potentielle Energie.

Es gibt Varianten, die dadurch gekennzeichnet sind, dass der Fluidspiegel im zweiten unterhalb des Fluidspiegels des ersten Fluidreservoirs liegt (siehe z.B. Figur 1). Im Turbinenbetrieb (Energiegewinnung) strömt Fluid durch die Spiegel-/Druckdifferenz vom ersten in das zweite Reservoir. Dadurch erhöht sich stetig das Gesamtgewicht des zweiten Reservoirs um das einströmende Fluid. Zum Ausgleich des stabilen Gleichgewichts des schwimmenden zweiten Reservoirs erhöht sich im selben Maß der Auftrieb (entspricht dem Gewicht des verdrängten Fluides) durch eine Absenkung des zweiten Reservoirs. Im Pumpbetrieb (Energiespeicherung) wird entgegen der Spiegel-/ Druckdifferenz Fluid vom zweiten in das erste Fluidreservoir befördert. Dadurch verringert sich stetig das Gesamtgewicht des zweiten Reservoirs um das ausströmende Fluid. Dementsprechend ist weniger Auftrieb notwendig, um das stabile Gleichgewicht des schwimmenden zweiten Reservoirs aufrecht zu erhalten. Die Verringerung des Auftriebs erfolgt durch eine Anhebung des zweiten Reservoirs.

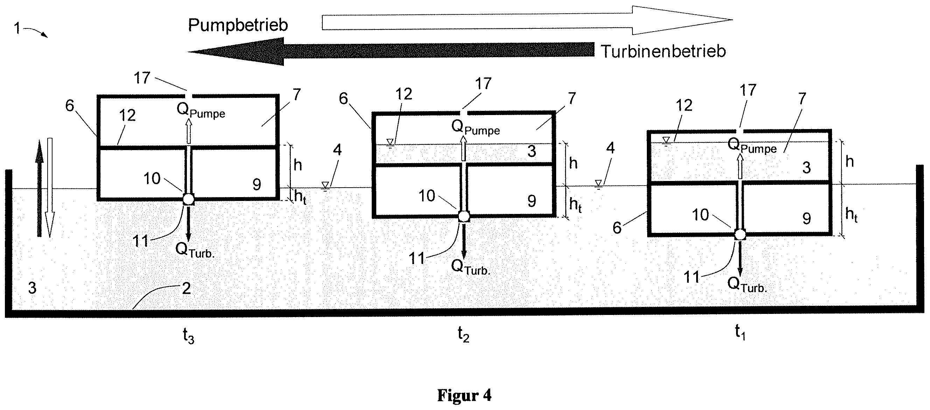

Andere Varianten sind dadurch gekennzeichnet, dass der Fluidspiegel im ersten unterhalb des Fluidspiegels des zweiten Fluidreservoirs liegt (siehe z.B. Figur 4). Im Turbinenbetrieb (Energiegewinnung) strömt Fluid durch die Spiegel-/Druckdifferenz vom zweiten in das erste Reservoir. Dadurch verringert sich stetig das Gesamtgewicht des zweiten Reservoirs um das ausströmende Fluid. Zum Ausgleich des stabilen Gleichgewichts des schwimmenden zweiten Reservoirs verringert sich im selben Maß der Auftrieb durch eine Anhebung des zweiten Reservoirs.

Im Pumpbetrieb (Energiespeicherung) wird entgegen der Spiegel-/Druckdifferenz Fluid vom ersten in das zweite Fluidreservoir befördert. Dadurch erhöht sich stetig das Gesamtgewicht des zweiten Reservoirs um das einströmende Fluid. Dementsprechend ist ein größerer Auftrieb notwendig, um das stabile Gleichgewicht des schwimmenden zweiten Reservoirs aufrecht zu erhalten. Die Vergrößerung des Auftriebs erfolgt durch eine Absenkung des zweiten Reservoirs.

Ausführungen des hydraulischen Energiespeichers ohne elastische Elemente in der Form von geraden allgemeinen Zylindern haben den Vorteil, dass die zur Energieumwandlung nutzbare Niveaudifferenz konstant bleibt. Damit können insbesondere die an der Turbinen-Pumpanordnung vorgesehenen Maschinen (Turbinen, Pumpen, Generatoren und Motoren) vereinfacht und auf einen optimalen Betriebspunkt hin ausgelegt werden.

Die bei der Energiespeicherung bzw. -umwandlung auftretenden Verluste sind konzeptbedingt sehr gering und reduzieren sich außerhalb der Maschinen im Wesentlichen auf die hydraulischen Verluste an den Ein- und Ausläufen der Turbinen-Pumpanordnung. Standard-Pumpen arbeiten mit einer spezifischen Leistung, d.h. im optimalen Betriebspunkt sind Energieaufnahme und Fluid-Durchfluss konstant. Standard-Turbinen können hingegen über die Regelung des Fluid-Durchflusses an die gewünschte Leistung angepasst werden. Durch gleichzeitigen Betrieb von Turbine und Pumpe kann ein Teil des Wassers im Kreis geführt werden (hydraulischer Kurzschluss). Bei geschickter Anordnung und Betriebsweise der Turbinen-Pumpanordnung wird somit eine stufenlose Energieabgabe bzw. Energieaufnahme mit jederzeit optimalem Wirkungsgrad möglich, welche jederzeit genau an die im Energie-Netz benötigte Leistung angepasst ist (Regel- und Ausgleichsenergie). Zudem können Betriebszustandsänderungen von Pump- in den Turbinenmodus und umgekehrt (Sondernutzungen mit schnellem Lastwechsel) sehr rasch durchgeführt werden.

Die volle Leistungsaufnahme- und -abgabefähigkeit kann konzeptbedingt in sehr kurzer Zeit gewährleistet werden. Damit kann z.B. Energie für die Stabilhaltung des Strom-Netzes gegen Leistungs- und Abnahmeschwankungen (Regelenergie) bereitgestellt werden.

Aufgrund der konzeptbedingt unbegrenzten Zyklenzahl und dem gleich bleibend hohen Wirkungsgrad werden im Betrieb erhebliche Vorteile gegenüber vergleichbaren Energiespeichersystemen erwartet. Hydraulische Energiespeicher sind aufgrund ihrer Einsatzbereitschaft ideale Ergänzungspartner für den verstärkten hoch volatilen Windenergie- und Photovoltaik-Ausbau.

Die Energie aus z.B. offshore Windenergie- und Photovoltaik-Parks kann direkt am Entstehungsort bzw. am Ort des Verbrauchs (z.B. vor küstennahen Städten) gespeichert werden und bedarfsgerecht an die Verbraucher abgegeben werden. Alternative Energiespeicherkonzepte (z.B. Nutzung der Pumpspeicherkapazitäten in Zentraleuropa) verlangen hingegen oft nach einer Erhöhung der Übertragungsleistung durch einen kostenintensiven Ausbau des Übertragungs- und Verteilnetzes.

In naher Zukunft steigt der Bedarf an offshore Energie-, Aquakultur- und Transport-Infrastruktur ("offshore terminals", maritime Serviceplattformen). Offshore Wind Parks werden schon bald große Gebiete in Nord- und Ostsee bedecken und eine entsprechende Rolle im Rahmen der europäischen Energieerzeugung einnehmen. Diesbezüglich werden vielseitig nutzbare offshore Plattformen zukünftig sowohl ökonomische als auch ökologische Vorteile bieten. Die Prinzipien des hydraulischen Energiespeichers lassen sich ideal in jedes Design von "multi-use offshore platforms" integrieren. Die kombinierte Nutzung mit variablen Aufbauten ist eine der Stärken des hydraulischen Energiespeichers. So sind z.B. schwimmende Plattformen als Siedlungs-, Industrie- bzw. Gewerbefläche für maritime Stadterweiterungen, schwimmende Zwischenlager für Überseecontainer, schwimmende Meereströmungskraftwerke und Solarfarmen, etc. jeweils mit integrierter Energiespeicherung denkbar.

Für die in den Figuren dargestellten Ausführungsbeispiele gilt folgendes:
Figur 1 zeigt ein erstes Ausführungsbeispiel eines hydraulischen Energiespeichers 1, der ein erstes Fluidreservoir 2 umfasst, welches beispielsweise ein natürliches Gewässer ist, z.B. ein See, ein Stausee, ein Meer oder eine Bucht.

Das erste Fluidreservoir, hier ausgeführt als erster Wasserbehälter 2, ist mit einem Fluid, hier Wasser 3, bis zu einem ersten Fluid- oder Wasserspiegel 4 gefüllt.

Im Wasser 3 schwimmend ist ein zweites Fluidreservoir, hier ausgeführt als zweiter Wasserbehälter 6, angeordnet, welches optional mit Zusatzlasten 8 versehen ist. Im Boden des zweiten Wasserbehälters 6 in einer Öffnung 11 ist eine Turbinen-Pumpanordnung 10 vorgesehen, über welche das Wasser 3 zwischen dem ersten Wasserbehälter 2 und dem zweiten Wasserbehälter 6 ausgetauscht werden kann. Die Turbinen-Pumpanordnung 10 ist mit einer elektrischen Maschine (Generator und/oder Motor) gekoppelt, die wiederum über ein Stromnetz mit Stromquellen (z.B. Windturbinen) oder Stromverbrauchern gekoppelt sind.

Zum Zeitpunkt t₁ schwimmt der zweite Wasserbehälter 6 mit einer Eintauchtiefe ht im ersten Wasserbehälter 2. Die Niveaudifferenz h zwischen dem ersten Wasserspiegel 4 im ersten Wasserbehälter 2 und dem zweiten Wasserspiegel 12 im zweiten Wasserbehälter 6 ist hier durch die Masse und den Auftrieb des zweiten Wasserbehälters 6 bedingt und kann über die Zusatzlasten (Ballast) 8 beeinflusst werden.

Zur Umwandlung der im zweiten Wasserbehälter 6 gespeicherten potentiellen Energie in kinetische Energie und nachfolgend in elektrische Energie durchströmt Wasser 3 die Turbinen-Pumpanordnung 10 als Volumenstrom Q_{Turb}. in Pfeilrichtung 14 in den Innenraum 7 des zweiten Wasserbehälters 6. Dieser füllt sich zunehmend mit Wasser 3 und der zweite Wasserbehälter 6 sinkt zunehmend im ersten Wasserbehälter 2 ab (Zustand t₂ und t₃). Dabei bleibt die nutzbare Niveaudifferenz h zwischen dem zweiten Wasserspiegel 12 und dem ersten Wasserspiegel 4 konstant, so dass die Turbinen-Pumpanordnung 10 mit konstanter Druckhöhe und Drehzahl betrieben werden kann. Gleiches gilt für eine angeschlossene elektrische Maschine hier Generator. Die umwandelbare Energiemenge richtet sich nach dem Volumen der im zweiten Wasserbehälter 6 speicherbaren Wassermenge und dem Wirkungsgrad der Turbinen-Pumpanordnung 10 in Verbindung mit den daran angeschlossenen elektrischen Maschinen. Beim Übergang von den Betriebszuständen t₁ nach t₃ arbeitet die Anlage im Turbinenbetrieb und es wird Energie gewonnen.

Um elektrische Energie in potentielle Energie umzuwandeln, läuft der Vorgang in umgekehrte Richtung ab (von t₃ nach t₁). Dabei wird eine als elektrischer Motor wirkende Maschine mit der Turbinen-Pumpanordnung 10 gekoppelt. Diese fördert im Pumpbetrieb das im zweiten Wasserbehälter 6 befindliche Wasser 3 als Volumenstrom QPᵤₘₚₑ in Pfeilrichtung 16 zurück in den ersten Wasserbehälter 2. Durch die Belüftung 17 eintretende Luft ersetzt das austretende Wasser 3 und erhöht den Auftrieb des zweiten Wasserbehälters 6, so dass sich dessen Eintauchtiefe ht verringert, während die zur Energieumwandlung nutzbare Niveaudifferenz h konstant bleibt, so dass auch im Pumpbetrieb eine konstante Motorleistung bei optimiertem Betriebspunkt nutzbar ist.

Durch das Anheben des zweiten Wasserbehälters 6 im ersten Wasserbehälter 2 (Pumpbetrieb beim Übergang von t₃ nach t₁) wird die elektrische und kinetische Energie durch Verrichten von Hubarbeit letztlich in potentielle Energie umgewandelt, die dann wiederum im Turbinenbetrieb durch Absenken/Fluten des zweiten Wasserbehälters 6 in elektrische Energie umgewandelt werden kann.

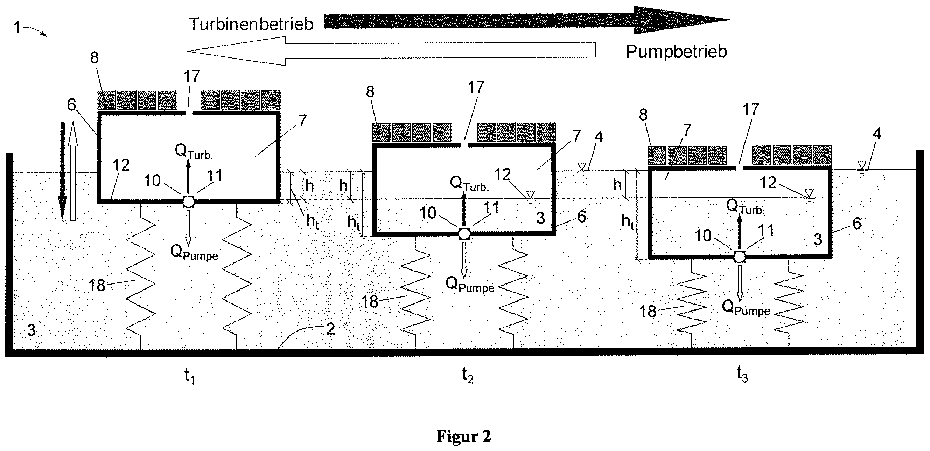

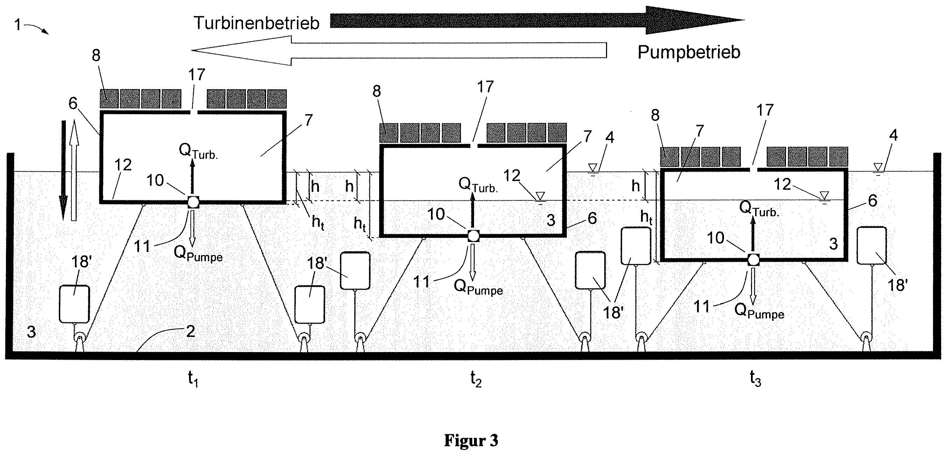

Figur 2 zeigt eine Abwandlung des in Figur 1 dargestellten Ausführungsbeispiels. Hier wird ein Teil der Zusatzlasten 8 durch eine elastische Zugvorrichtung 18 ersetzt, über die die Eintauchtiefe hₜ und damit auch die nutzbare Niveaudifferenz h erhöht werden kann. Die Zugvorrichtung 18 ist in Figur 2 durch stilisierte Federn dargestellt. In anderen Ausführungen (siehe Figur 3) kann so eine Zugvorrichtung auch über am Grund des ersten Fluidreservoirs 2 umgelenkte Auftriebskörper 18' erfolgen. Zugvorrichtungen haben zudem die positive Eigenschaft, dass sie seitlichen Auslenkungen des zweiten Wasserbehälters 6 entgegen wirken und damit die horizontale Lage stabilisieren.

Die Figuren 4 bis 6 zeigen weitere Ausführungsbeispiele, bei welchen der erste Wasserspiegel 4 im ersten Wasserbehälter 2 unterhalb des zweiten Wasserspiegels 12 im zweiten Wasserbehälter 6 liegt. Hier läuft die Energieumwandlung in umgekehrter Richtung ab. Dazu ist der zweite Wasserbehälter 6 mit Auftriebskörpern 9 versehen, welche den Boden des zweiten Wasserbehälters 6 um die Niveaudifferenz h über den ersten Wasserspiegel 4 hinausheben.

Zum Energiespeichern (t₃ nach t₁), also zum Umwandeln elektrischer Energie in potentielle Energie, wird die Turbinen-Pumpanordnung 10 im Pumpbetrieb zur Förderung des Wassers 3 in den Innenraum 7 des zweiten Wasserbehälters 6 genutzt. Dabei wird dieser gefüllt und drückt den Auftriebskörper 9 immer tiefer in das Wasser 3 im ersten Wasserbehälter 2. Der zweite Wasserbehälter 6 sinkt ab. Auch hier kann die nutzbare Niveaudifferenz h während des Pumpenbetriebs konstant gehalten werden.

Die Energiegewinnung läuft in umgekehrter Richtung (t₁ nach t₃) ab. Durch die Niveaudifferenz h zwischen erstem 4 und zweitem Wasserspiegel 12 drückt das im zweiten Wasserbehälter 6 befindliche Wasser 3 aus dem zweiten Wasserbehälter hinaus und treibt dabei - im Turbinenbetrieb - die Turbinen-Pumpanordnung 10 an, welche die kinetische Energie über eine elektrische Maschine (Generator) in elektrische Energie umwandelt. Dabei entleert sich der zweite Wasserbehälter 6 und hebt sich im Wasser 3 des ersten Wasserbehälters 2 nach oben.

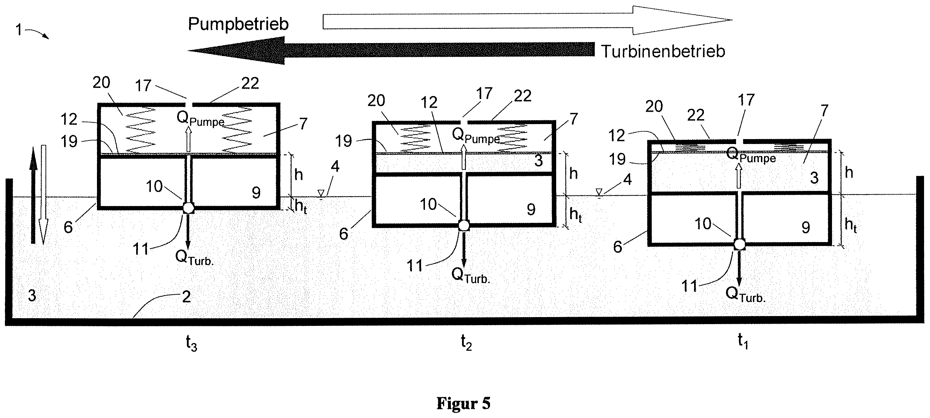

Figur 5 zeigt eine Ausführung, bei welcher die Energiespeicherkapazität durch ein zusätzliches elastisches Element erhöht wird. Hier ist beispielsweise im zweiten Wasserbehälter 6 eine der Grundfläche entsprechende Dichtscheibe 19 vorgesehen, welche auf dem zweiten Wasserspiegel 12 aufliegt und über eine Druckfederanordnung 20 gegen die Decke 22 des zweiten Wasserbehälters 6 abgestützt ist. Beim Hineinpumpen von Wasser 3 in den zweiten Wasserbehälter 6 wird zum einen potentielle Energie durch Hochpumpen des Wassers 3 um die nutzbare Niveaudifferenz h und zum anderen zusätzlich Spannenergie durch Verformen der elastischen Federn 20 gespeichert.

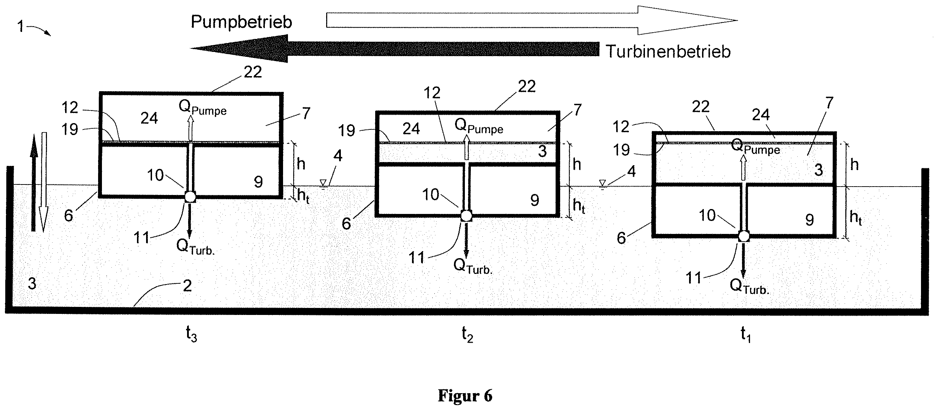

Figur 6 zeigt eine Ausführung, bei der dieses Prinzip über einen über dem zweiten Wasserspiegel 12 befindlichen Gaspuffer 24 realisiert wird. Der zweite Wasserbehälter 6 ist als geschlossener Behälter ausgeführt und das im Pumpbetrieb in den zweiten Wasserbehälter 6 gelangende Wasser 3 verdichtet zusätzlich den Gaspuffer 24, der hier als Luftpuffer ausgebildet ist. Dadurch wird auch bei dieser Ausführung die Energiespeicherkapazität erhöht.

Weitere Varianten und Ausführungen ergeben sich für den Fachmann im Rahmen der Ansprüche.

## Patentansprüche

1. Hydraulischer Energiespeicher (1) mit einem ersten (2) und einem zweiten Fluidreservoir (6), deren Fluidspiegel (4, 12) in unterschiedlicher Höhe verlaufen, die über eine Turbinen-Pumpanordnung (10) miteinander verbunden sind und bei deren Betrieb ein Fluid (3) zwischen dem ersten (2) und zweiten Fluidreservoir (6) hin und her bewegbar ist, dabei Energie umwandelbar ist, **dadurch gekennzeichnet, dass** das zweite Fluidreservoir (6) als Behälter ausgebildet ist, der innerhalb des Fluids (3) im ersten Fluidreservoir (2) angeordnet ist, wobei im Betrieb der Fluidspiegel (12) im zweiten Fluidreservoir (6) so veränderbar ist, dass dadurch auftriebsbedingt die Eintauchtiefe (ht) des zweiten Fluidreservoirs (6) im ersten Fluidreservoir (2) veränderbar ist.

2. Hydraulischer Energiespeicher (1) nach Anspruch 1, bei welchem der Fluidspiegel (12) des zweiten Fluidreservoirs (6) unterhalb des Fluidspiegels (4) des ersten Fluidreservoirs (2) liegt.

3. Hydraulischer Energiespeicher (1) nach Anspruch 1 oder 2, bei welchem das zweite Fluidreservoir (6) mit Zusatzlasten (8) versehen ist, um die Eintauchtiefe (ht) und die Niveaudifferenz (h) zu erhöhen.

4. Hydraulischer Energiespeicher (1) nach Anspruch 1, 2 oder 3, bei welchem die Eintauchtiefe (ht) und die Niveaudifferenz (h) über eine Zugvorrichtung (18, 18') erhöht wird.

5. Hydraulischer Energiespeicher (1) nach Anspruch 1 oder 2, bei welchem das zweite Fluidreservoir (6) mit einem oder mehreren Auftriebskörpern (9) versehen ist, so dass der Fluidspiegel (12) des zweiten Fluidreservoirs (6) oberhalb des Fluidspiegels (4) des ersten Fluidreservoirs (2) liegt.

6. Hydraulischer Energiespeicher (1) nach einem der Ansprüche 1 bis 5, bei welchem das Fluid (3) beim Befüllen des zweiten Fluidreservoirs (6) ein elastisches Element (20, 24) gegen eine Spannkraft verformt.

7. Hydraulischer Energiespeicher (1) nach Anspruch 6, bei welchem das elastische Element (20, 24) eine Federkonstruktion (19, 20) umfasst und/oder als gasförmiger Puffer (24) ausgebildet ist.

8. Hydraulischer Energiespeicher (1) nach Anspruch 7, bei welchem der gasförmige Puffer als über dem Fluidspiegel (12) des zweiten Fluidreservoirs (6) angeordnetes Luftkissen (24) ausgebildet ist und das zweite Fluidreservoir (6) als geschlossener Behälter ausgebildet ist.

9. Hydraulischer Energiespeicher (1) nach einem der vorhergehenden Ansprüche, bei welchem die Pump-Turbineneinrichtung (10) in einer Öffnung (11) im Bodenbereich des zweiten Fluidspeichers (6) angeordnet ist.

10. Hydraulischer Energiespeicher (1) nach einem der vorhergehenden Ansprüche, bei welchem die Pump-Turbineneinrichtung (10) mit einer elektrischen Maschine gekoppelt ist, die in einem Pumpbetrieb als elektrischer Motor und in einem Turbinenbetrieb als Generator einsetzbar ist und mit einem elektrischen Verbraucher und/oder mit einer elektrischen Stromquelle verbindbar ist.

11. Großenergiespeicheranlage mit einem hydraulischen Energiespeicher (1) nach einem der vorhergehenden Ansprüche, bei welchem das erste Fluidreservoir (2) ein Gewässer, insbesondere ein Meer, See oder Stausee, ist.

## Claims

1. A hydraulic energy store (1) comprising a first (2) and a second fluid reservoir (6) whose fluid levels (4, 12) are at different heights, which are connected to one another via a turbine pump arrangement (10) wherein during the operation of the hydraulic pump arrangement, a fluid (3) is movable to and fro between the first fluid reservoir (2) and the second fluid reservoir (6) to convert energy, **characterized in that** the second fluid reservoir (6) is configured as a container which is arranged in the fluid (3) within the first fluid reservoir (2), such that during operation, the fluid level (12) in the second fluid reservoir (6) can be changed in such a way that the immersion depth (ht) of the second fluid reservoir (6) in the first fluid reservoir (2) can be changed due to buoyant force.

2. The hydraulic energy store (1) according to Claim 1, wherein the fluid level (12) of the second fluid reservoir (6) is below the fluid level (4) of the first fluid reservoir (2).

3. The hydraulic energy store (1) according to Claim 1 or 2, wherein the second fluid reservoir (6) is provided with additional loads (8) in order to increase the immersion depth (ht) and the level difference (h).

4. The hydraulic energy store (1) according to Claim 1, 2 or 3, wherein the immersion depth (ht) and the level difference (h) are increased via a pulling arrangement (18, 18').

5. The hydraulic energy store (1) according to Claim 1 or 2, wherein the second fluid reservoir (6) is provided with one or more buoyant bodies (9), in such a way that the fluid level (12) of the second fluid reservoir (6) lies above the fluid level (4) of the first fluid reservoir (2).

6. The hydraulic energy store (1) according to any one of the preceding Claims 1 to 5, wherein during filling of the second fluid reservoir (6), the fluid (3) deforms a resilient element (20, 24) against a tension force.

7. The hydraulic energy store (1) according to Claim 6, wherein the resilient element (20, 24) comprises a spring arrangement (19, 20) and/or is arranged as a gaseous buffer (24).

8. The hydraulic energy store (1) according to Claim 7, wherein the gaseous buffer is formed as an air cushion (24) arranged above the fluid level (12) of the second fluid reservoir (6), and the second fluid reservoir (6) is formed as a closed container.

9. The hydraulic energy store (1) according to any one of the preceding Claims, wherein the turbine pump arrangement (10) is arranged in an opening (11) in a bottom area of the second fluid reservoir (6).

10. The hydraulic energy store (1) according to any one of the preceding Claims, wherein the turbine pump arrangement (10) is coupled to an electrical machine which - when operating as a pump - can be used as an electrical motor and - when operating as a turbine - can be used as a generator and which can be connected to an electrical device and/or to an electrical power source.

11. A large energy storage installation comprising a hydraulic energy store (1) according to any one of the preceding claims, whereby the first fluid reservoir (2) is a water body such as an ocean/a sea, a lake, and/or an artificial lake.

## Revendications

1. Réservoir d'énergie hydraulique (1) comprenant un premier (2) et un deuxième (6) réservoir de fluide dont les niveaux de fluide (4, 12) se situent à des hauteurs différentes, qui sont reliés l'un à l'autre par l'intermédiaire d'un système de turbine-pompe (10) lors du fonctionnement duquel un fluide (3) peut être déplacé en un mouvement de va-et-vient entre les premier (2) et deuxième (6) réservoirs de fluide, permettant ainsi de convertir de l'énergie, **caractérisé en ce que** le deuxième réservoir de fluide (6) est réalisé sous la forme d'un récipient qui est disposé à l'intérieur du fluide (3) dans le premier réservoir de fluide (2), le niveau de fluide (12) dans le deuxième réservoir de fluide (6) étant modifiable lors du fonctionnement, de manière à ce que la profondeur d'immersion (ht) du deuxième réservoir de fluide (6) dans le premier réservoir de fluide (2) soit modifiable du fait de la flottabilité.

2. Réservoir d'énergie hydraulique (1) selon la revendication 1, dans lequel le niveau de fluide (12) du deuxième réservoir de fluide (6) se situe au-dessous du niveau de fluide (4) du premier réservoir de fluide (2).

3. Réservoir d'énergie hydraulique (1) selon la revendication 1 ou 2, dans lequel le deuxième réservoir de fluide (6) est doté de charges supplémentaires (8), afin d'augmenter la profondeur d'immersion (ht) et la différence de niveau (h).

4. Réservoir d'énergie hydraulique (1) selon la revendication 1, 2 ou 3, dans lequel la profondeur d'immersion (ht) et la différence de niveau (h) sont augmentées à l'aide d'un dispositif de traction (18, 18').

5. Réservoir d'énergie hydraulique (1) selon la revendication 1 ou 2, dans lequel le deuxième réservoir de fluide (6) est doté d'un ou plusieurs flotteurs (9), de sorte que le niveau de fluide (12) du deuxième réservoir de fluide (6) se situe au-dessus du niveau de fluide (4) du premier réservoir de fluide (2).

6. Réservoir d'énergie hydraulique (1) selon l'une des revendications 1 à 5, dans lequel, lors du remplissage du deuxième réservoir de fluide (6), le fluide (3) déforme un élément élastique (20, 24), à l'encontre d'une force élastique.

7. Réservoir d'énergie hydraulique (1) selon la revendication 6, dans lequel l'élément élastique (20, 24) comprend une structure à ressort (19, 20) et/ou est réalisé sous forme de tampon gazeux (24).

8. Réservoir d'énergie hydraulique (1) selon la revendication 7, dans lequel le tampon gazeux est réalisé sous forme de coussin d'air (24), disposé au-dessus du niveau de fluide (12) du deuxième réservoir de fluide (6), et le deuxième réservoir de fluide (6) est réalisé sous forme de récipient fermé.

9. Réservoir d'énergie hydraulique (1) selon l'une des revendications précédentes, dans lequel le système pompe-turbine (10) est disposé dans une ouverture (11) dans la région du fond du deuxième réservoir de fluide (6).

10. Réservoir d'énergie hydraulique (1) selon l'une des revendications précédentes, dans lequel le système pompe-turbine (10) est couplé à une machine électrique qui, en mode pompage, peut être utilisée comme moteur électrique et, en mode turbinage, comme générateur et peut être reliée à un utilisateur électrique et/ou à une source de courant électrique.

11. Installation de stockage d'énergie de grandes dimensions comprenant un réservoir d'énergie hydraulique (1) selon l'une des revendications précédentes, dans lequel le premier réservoir de fluide (2) est une étendue d'eau, en particulier une mer, un lac ou un lac de barrage.
